# EUROPÄISCHE PATENTANMELDUNG

(11) **EP 3 142 165 A1**
(43) Veröffentlichungstag der Anmeldung: **15.03.2017**
(21) Anmeldenummer: 15184664.9
(22) Anmeldetag: 10.09.2015
(51) Int. Cl.: H01M 2/02, H01M 2/34, B60L 11/18, H01M 10/052, H02J 7/00

(54) **BATTERIESYSTEM MIT EINEM ÜBERLADUNGS- UND/ODER TIEFENTLADUNGSSCHUTZ**

(71) Anmelder: Lithium Energy and Power GmbH & Co. KG, 70469 Stuttgart (DE)
(72) Erfinder: Wilka, Marcel, Nishimiyahara, 532-0004 (JP)
(74) Vertreter: Bee, Joachim

(57) **Zusammenfassung**

Batteriesystem mit einem Überladungs- und/oder Tiefentladungsschutz, umfassend mindestens einen elektrischen Energiespeicher mit einem ersten Pol, der mit einer ersten Elektrode des elektrischen Energiespeichers elektrisch verbunden ist, mit einem zweiten Pol, der mit einer zweiten Elektrode des elektrischen Energiespeichers elektrisch verbunden ist, mit einer Schnellentladeeinheit zum elektrischen Entladen des elektrischen Energiespeichers mit einem ersten Anschluss, der mit dem ersten Pol elektrisch verbunden ist, dadurch gekennzeichnet, dass das Batteriesystem eine Auslöseeinheit mit einer elektrisch leitfähigen mechanischen Komponente zum Auslösen der Schnellentladeeinheit umfasst, wobei die mechanische Komponente mittels eines elektrisch leitfähigen Gehäuses des elektrischen Energiespeichers und/oder mittels einer elektrischen Verbindung direkt mit dem zweiten Pol elektrisch verbunden ist.

## Beschreibung

Die Erfindung geht aus von einem Batteriesystem mit einem Überladungs- und/oder Tiefentladungsschutz, umfassend mindestens einen elektrischen Energiespeicher mit einem ersten Pol, der mit einer ersten Elektrode des elektrischen Energiespeichers elektrisch verbunden ist, mit einem zweiten Pol, der mit einer zweiten Elektrode des elektrischen Energiespeichers elektrisch verbunden ist, mit einer Schnellentladeeinheit zum elektrischen Entladen des elektrischen Energiespeichers mit einem ersten Anschluss, der mit dem ersten Pol elektrisch verbunden ist, mit einem zweiten Anschluss, der mit dem zweiten Pol elektrisch verbunden ist gemäß dem Oberbegriff der unabhängigen Ansprüche.

### Stand der Technik

Die Druckschrift DE 10 2011 015 829 A1 offenbart eine elektrochemische Energiespeicherzelle mit einer Stromunterbrechungseinrichtung zur Unterbrechung wenigstens eines zum Betrieb der Energiespeicherzelle vorgesehenen elektrischen Anschlusses der Energiespeicherzelle. Weiterhin weist die Energiespeicherzelle eine Entladungseinrichtung auf, die eine vollständige oder teilweise Entladung der Energiespeicherzelle ermöglicht, wenn wenigstens ein zum Betrieb der Energiespeicherzelle vorgesehener elektrischer Anschluss der Energiespeicherzelle durch die Stromunterbrechungseinrichtung unterbrochen ist. Hierdurch wird eine Entladung der Energiespeicherzelle und damit ein sicherer Transport und eine sichere Lagerung der Energiespeicherzelle ermöglicht, gleichzeitig jedoch ein weiterer Betrieb der möglicherweise durch eine Überladung beschädigten Energiespeicherzelle verhindern.

Die Druckschrift DE 10 2012 219 082A1 offenbart eine Sicherheitsvorrichtung zur Anordnung in einer Batteriezelle einer Lithium-Ionen-Batterie umfassend wenigstens einen ebenflächig ausgebildeten metallischen Leiter, insbesondere eine metallische Leiterplatte oder metallische Folie, auf den eine Isolationsschicht aufgebracht ist und welche eine Polkontaktierung zur elektrischen Verbindung mit einem Pol der Batteriezelle aufweist, wobei der Leiter wenigstens einen auf der Isolationsschicht angeordneten Heizwiderstand mit einer ersten und einer zweiten Kontaktierung aufweist, wobei über die Kontaktierungen einer elektrischer Strom durch den Heizwiderstand geleitet werden kann.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass das Batteriesystem eine Auslöseeinheit mit einer elektrisch leitfähigen mechanischen Komponente zum Auslösen der Schnellentladeeinheit umfasst, wobei die mechanische Komponente mittels eines elektrisch leitfähigen Gehäuses des elektrischen Energiespeichers und/oder mittels einer elektrischen Verbindung direkt mit dem zweiten Pol elektrisch verbunden ist. Dadurch kann vorteilhafterweise ein elektrischer Energiespeicher des Batteriesystem sehr schnell entladen werden und das Batteriesystem in einen sicheren Zustand überführt wird.

Weitere vorteilhafte Ausführungsformen sind Gegenstand der Unteransprüche.

Die Schnellentladeeinheit umfasst eine Schnellentladeschaltung, mittels der vorteilhafterweise eine schnelle Entladung des elektrische Energiespeicher sichergestellt ist. Weiter kann durch eine geeignete Auslegung der Schnellentladeschaltung die Schnellentladeeinheit an beliebige Batteriesysteme angepasst werden.

Die Schnellentladeschaltung umfasst eine Entladeschaltung mit Leistungshalbleitern und eine Halbbrücke. Dadurch kann der elektrische Energiespeicher schnell entladen und in einen sicheren Zustand überführt werden.

Die mechanische Komponente der Auslöseeinheit ist durch eine auf die mechanische Komponente wirkende Kraft, beispielsweise ein Druckanstieg in dem Batteriesystem, reversibel oder irreversibel verformbar. Durch die reversible Verformung wird nach Rückkehr des elektrischen Energiespeichers in einen normalen Betriebszustand die elektrisch leitende Verbindung zwischen dem Leiter und der Kontaktierung der Schnellentladeeinheit getrennt, wodurch der elektrische Energiespeicher dem Batteriesystem wieder zur Verfügung steht.

Ist die mechanische Komponente irreversibel verformt, so bleibt der elektrische Energiespeicher dauerhaft vom Batteriesystem getrennt, wodurch vorteilhafter Weise eine Wiederinbetriebnahme des elektrischen Energiespeichers verhindert wird.

Die mechanische Komponente der Auslöseeinheit kann sowohl als zusätzliches Bauteil ausgeführt sein und/oder mittels eines vorhandenden Bauteils, beispielsweise eines Überdruckventils realisiert sein.

Das erfindungsgemäße Verfahren zur Ansteuerung einer Schnellentladeeinheit der Entladeschaltung des Batteriesystems schaltet zum Entladen des elektrischen Energiespeichers einen Leistungshalbleiter in einer Halbrücke der Schnellentaldeschaltung ein und betreibt einen anderen Leistungshalbleiter der Entladeschaltung in einem aktiven Betrieb als steuerbaren Widerstand.

Vorteilhafterweise wird das erfindungsgemäße Batteriesystem in einem Fahrzeug mit mindestens einem elektrischen Energiespeicher verwendet, wodurch geltende Sicherheitsstandards mit vergleichsweise geringerem Aufwand eingehalten werden können.

Vorteilhafterweise ist der elektrische Energiespeicher eine Lithium-Ionen-, eine Lithium-Schwefel- und/oder eine Lithium-Luft-Batterie. Insbesondere bei diesen Arten von elektrischen Energiespeichern ist eine schnelle Überführung in einen sicheren Zustand aufgrund möglicher chemischer Folgeraktionen vorteilhaft.

Es zeigt:
Figur 1 zeigt eine erste Ausführungsform des erfindungsgemäßen Batteriesystems; und
Figur 2a zeigt eine zweite Ausführungsform des erfindungsgemäßen Batteriesystems; und
Figur 2b die zweite Ausführungsform des erfindungsgemäßen Batteriesystems bei Vorliegen eines abnormalen Betriebszustands des elektrischen Energiespeichers; und
Figur 3 eine Ausführungsform einer Schnellentladeschaltung; und
Figur 4a eine erste Ausführungsform einer mechanischen Komponente einer Auslöseeinheit des erfindungsgemäßen Batteriesystems; und
Figur 4b eine zweite Ausführungsform einer mechanischen Komponente einer Auslöseeinheit des erfindungsgemäßen Batteriesystems; und
Figur 4c eine dritte Ausführungsform einer mechanischen Komponente einer Auslöseeinheit des erfindungsgemäßen Batteriesystems.

### Detaillierte Beschreibung der Ausführungsbeispiele

Gleiche Bezugszeichen bezeichnen in allen Figuren gleiche Vorrichtungskomponenten.

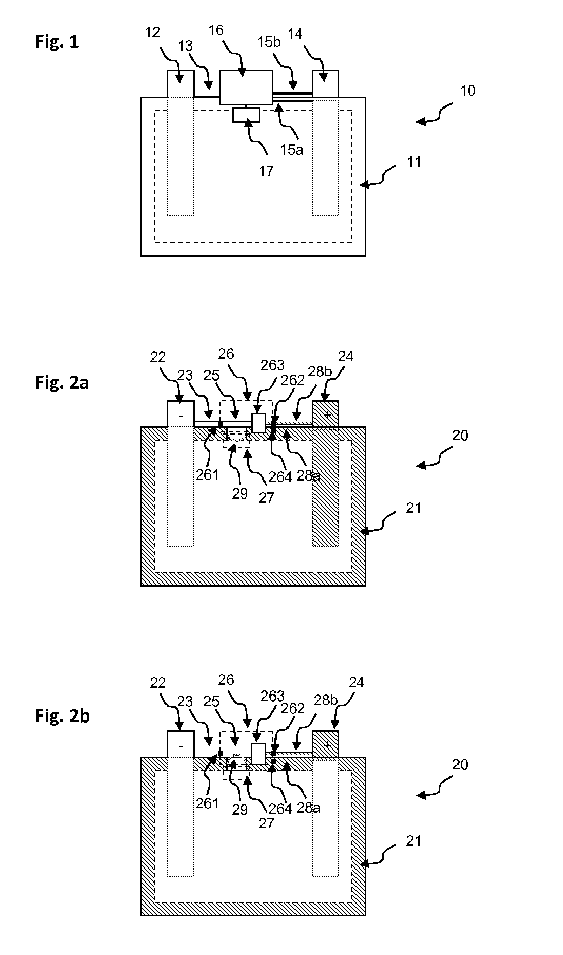

Figur 1 zeigt eine erste Ausführungsform des erfindungsgemäßen Batteriesystems 10 mit mindestens einem elektrischen Energiespeicher, mit einem ersten Pol 12, der mit einer ersten Elektrode des elektrischen Energiespeichers elektrisch verbunden ist, mit einem zweiten Pol 14, der mit einer zweiten Elektrode des elektrischen Energiespeichers elektrisch verbunden ist, mit einer Schnellentladeeinheit 16 zum elektrischen Entladen des elektrischen Energiespeichers mit einem ersten Anschluss, der mit dem ersten Pol elektrisch verbunden ist, beispielsweise über eine elektrische Verbindung 13, mit einem zweiten Anschluss, der mit dem zweiten Pol elektrisch verbunden ist, beispielsweiser mittels einer elektrischen Verbindung 15, einer Auslöseeinheit 17 zum Auslösen der Schnellladeeinheit 16 sowie einem Gehäuse 11 des elektrischen Energiespeichers.

Die Auslöseeinheit 17 kann sowohl als zusätzliches Bauteil ausgeführt sein oder mittels eines vorhandenden Bauteils, beispielsweise ein Überdruckventil bei Hard-Case-Zellen, wodurch vorteilhafterweise Bauteile eingespart werden.

Figur 2a zeigt eine zweite Ausführungsform des erfindungsgemäßen Batteriesystems 20 in einem normalen Betriebszustand eines elektrischen Energiespeichers. Der elektrische Energiespeichers umfasst einen ersten Pol 22, beispielsweise einen Minuspol, der mittels einer elektrischen Verbindung 23 mit einem ersten Anschluss 261 mit einer Schnellentladeeinheit 26 elektrisch verbunden ist, sowie einem zweiten Pol 24, beispielsweise einem Pluspol des elektrischen Energiespeichers, der mittels einer elektrischen Verbindung 28b mit einem zweiten Anschluss 262 mit der Schnellentladeeinheit 26 elektrisch verbunden ist, einem dritten Anschluss 264, der mit einer Elektrode des zweiten Pols 24 elektrisch verbunden ist sowie einer Auslöseeinheit 27 umfassend eine mechanische Komponente 29, die elektrisch leitfähig ist und über das elektrisch leitfähige Gehäuse 21 des elektrischen Energiespeichers mit dem zweiten Pol 24 elektrisch verbunden ist. Die mechanische Komponente 29 der Auslöseeinheit 27 ist reversibel oder irreversibel verformbar, beispielsweise durch eine auf die mechanische Komponente 29 wirkende Kraft. Die Schnellentladeeinheit 26 umfasst einen Leiter 25, der über die erste Schnittstelle 261 mit der elektrischen Verbindung 23 elektrisch verbunden ist und einer elektronischen Schnellentladeschaltung 263, die über die zweite Schnittstelle 262 mit der elektrischen Verbindung 28b und über die dritte Schnittstelle 264 mit der elektrischen Verbindung 28a elektrisch verbunden ist

In dem normalen Betriebszustand des elektrischen Energiespeichers besteht keine elektrische Verbindung zwischen der mechanischen Komponente 29 der Auslöseeinheit 27 mit dem Leiter 25 der Schnellentladeeinheit 26.

Figur 2b zeigt die zweite Ausführungsform des erfindungsgemäßen Batteriesystems 20 in einem abnormalen Betriebszustand des elektrischen Energiespeichers. Ein abnormaler Betriebszustand des elektrischen Energiespeichers liegt beispielsweise vor, wenn dieser durch einen zu großen Ladestrom geladen wird, was beispielsweise zu einer Druckerhöhung im inneren des Gehäuses 21 des elektrischen Energiespeichers führt. Durch den Druckanstieg wird die mechanische Komponente 29 der Auslöseeinheit 27 bei Überschreitung eines vorgebbaren Druckes reversibel oder irreversibel verformt, wodurch eine elektrische Verbindung zwischen der mechanischen Komponente 29 der Auslöseeinheit 27 und dem Leiter 25 der Schnellentladeeinheit 26 entsteht. Durch diese elektrische Verbindung fließt ein Strom zwischen dem zweiten Pol 24 und dem ersten Pol 22 über das leitfähige Gehäuse 21, die mechanische Komponente 29, den Leiter 25 und die Leitung 23. Die Schnellentladeeinheit 26, die Schnellentladeschaltung 263 und/oder ein Batteriemanagementsystem erfasst diesen fließenden Strom, beispielsweise über eine elektrische Verbindung mit dem Leiter 25, worauf die Schnellentladeschaltung 263 den elektrischen Energiespeicher über den Leiter 25 und die elektrische Verbindung 23 und/oder über eine direkte elektrische Verbindung zwischen der Schnellentladeschaltung 263 und dem ersten Pol 22 kurzschließt und entlädt.

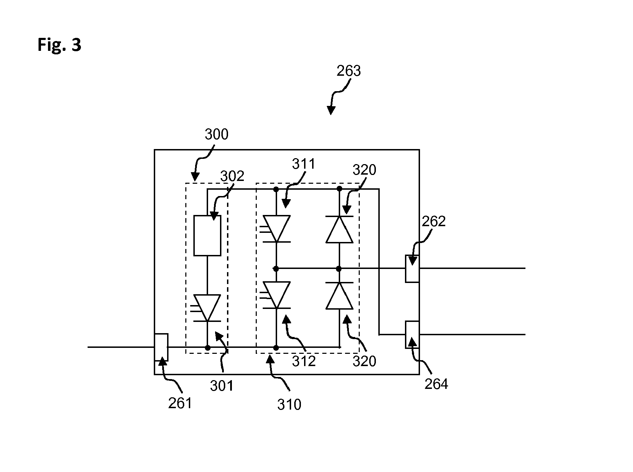

Figur 3 zeigt eine Ausführungsform einer Schnellentladeschaltung 263. Erkennt eine Überwachungs- und Ansteuerungseinheit der Schnellentladeeinheit 26 ausgehend von einem normalen Betrieb des elektrischen Energiespeichers eine drohende Überladung des elektrischen Energiemoduls anhand einer Überschreitung eines ersten Spannungsgrenzwertes, wird der erste Leistungshalbleiter 311 einer Halbbrücke 310 ausgeschaltet und der zweite Leistungshalbleiter 312 wird eingeschaltet. Da die Spannung innerhalb eines minimalen und maximalen Grentwerts liegt, sperrt die Diode 320 des ersten Leistungshalbleiters 311 auch bei drohender Überladung, beispielsweise bei einer Fehlfunktion beim Laden des elektrischen Energiespeichers. Dadurch kann eine weitere Aufladung des elektrischen Energiespeichers sicher verhindert werden.

Erkennt die Überwachungs- und Ansteuerungseinheit der Schnellentladeeinheit 26 ausgehend von einem normalen Betrieb des elektrischen Energiespeichers eine drohende Tiefentladung des elektrischen Energiespeichers anhand einer Unterschreitung eines zweiten Spannungsgrenzwertes, wird der erste Leistungshalbleiter 311 der Halbbrücke 310 ausgeschaltet und ein zweiter Leistungshalbleiter 312 wird eingeschaltet. Es fließt dann kein Strom mehr durch den elektrischen Energiespeichers. Ein eventuell nach außen abgegebener Strom in dem elektrischen Energiespeichers nur über den Leistungshalbleiter 241 der Schnellentladeschaltung.

Erkennt die Überwachungs- und Ansteuerungseinheit der Schnellentladeeinheit 26 ausgehend von einem normalen Betrieb des elektrischen Energiespeichers eine drohende Überlastung des elektrischen Energiespeichers durch zu hohe Entladeströme, die beispielsweise als Folge eines externen Kurzschlusses des elektrischen Energiespeichers auftreten können, wird der erste Leistungshalbleiter 311 der Halbbrücke 310 ausgeschaltet und der zweite Leistungshalbleiter 312 wird eingeschaltet. Es fließt dann kein Strom mehr durch den elektrischen Energiespeicher. Der elektrische Energiespeichers wird so vor einer Belastung mit unzulässig hohen Entladeströmen geschützt.

Erkennt die Überwachungs- und Ansteuerungseinheit der Schnellentladeeinheit 26 ausgehend von einem normalen Betrieb eine drohende Überlastung des elektrischen Energiespeichers durch zu hohe Ladeströme beispielsweise bei sehr tiefen Temperaturen, wird mittels der Überwachungs- und Ansteuerungseinheit der erste Leistungshalbleiter 311 der Halbbrücke 310 ausgeschaltet und der zweite Leistungshalbleiter 312 wird eingeschaltet. Es fließt dann kein Strom mehr durch den elektrischen Energiespeicher. Der elektrische Energiespeichers wird so vor einer Belastung mit unzulässig hohen Ladeströmen geschützt.

Wird der Überwachungs- und Ansteuerungseinheit des erfindungsgemäßen Batteriesystems beispielsweise in einem Fahrzeug von einem Batteriemanagementsystem mitgeteilt, dass das Fahrzeug einen Unfall hatte, kann der elektrische Energiespeichers über die Halbbrücke 310 entladen werden. Dazu wird der zweite Leistungshalbleiter 312 eingeschaltet und der erste Leistungshalbleiter 311 im sogenannten aktiven Betrieb als steuerbarer Widerstand betrieben. Der elektrische Energiespeicher gibt an seinen Polen 22, 24 dann keine Spannung ab und wird trotzdem langsam entladen. Die realisierbaren Entladeströme sind begrenzt durch die thermische Verlustleistung, die dem als steuerbarer Widerstand betriebenen Leistungshalbleiter im Dauerbetrieb auferlegt werden kann. Ein insbesondere als steuerbarer Widerstand betriebener Leistungshalbleiter 311 inklusive seiner thermische Anbindung und Kühlung wird daher entsprechend den Anforderungen ausgelegt werden.

Die Schnellentladeeinheit 26 umfasst ferner eine ultraschnelle Entladeschaltung (Ultra Fast Discharge Device, UFDD) 270, eine Serienschaltung aus einem Leistungshalbleiter 301 und einem Widerstand 302. Eine Entladeschaltung 300 ist in der Schnellentladeeinheit 26 zum Entladen des elektrischen Energiespeichers mittels eines durch die Entladeschaltung 270 fließenden Entladestromes vorgesehen. Wird der Überwachungs- und Ansteuerungseinheit des Batteriesystems von einem Batteriemanagementsystem mitgeteilt, dass das Fahrzeug einen Unfall hatte, wird der elektrische Energiespeicher über die Entladeschaltung 300 schnell entladen.

Um die Entladeschaltung 300 zu unterstützen, kann der elektrische Energiespeicher gleichzeitig auch über die Halbbrücke 310 entladen werden. Um die Entladeschaltung 300 zu unterstützen, wird somit mittels der Überwachungs- und Ansteuerungseinheit der zweite Leistungshalbleiter 312 der Halbbrücke 310 eingeschaltet. Der elektrische Energiespeicher gibt dann an seinen Polen 22, 23 während der Entladung keine Spannung ab. Die Entladeschaltung 300 kann so ausgelegt sein, dass der elektrische Energiespeicher mit sehr großen Entladeströmen nahe dem Kurzschluss entladen werden kann. Der elektrische Energiespeicher wird damit sehr schnell in einen sicheren Zustand gebracht. Dabei kann unterstützend mittels der Überwachungs- und Ansteuerungseinheit auch der erste Leistungshalbleiter 311 im aktiven Betrieb als steuerbarer Widerstand betrieben werden.

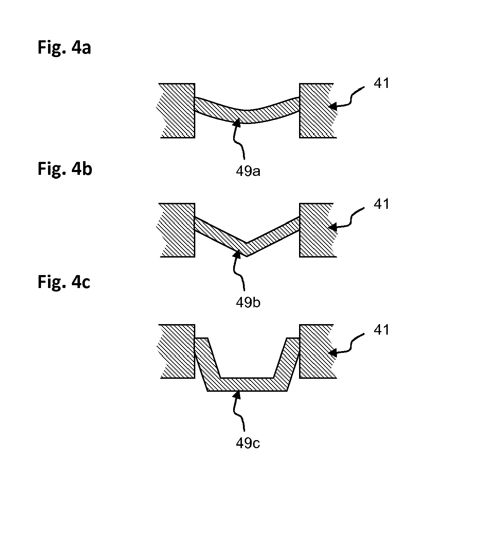

Figur 4a zeigt eine erste Ausführungsform einer mechanischen Komponenten 49a, einer Auslöseeinheit des erfindungsgemäßen Betriebssystems. Die mechanische Komponente 49a ist elektrisch leitend mit einem Gehäuse 41 eines elektrischen Energiespeichers verbunden. Die mechanische Komponente 49a der gezeigten Auslöseeinheit ist reversibel oder irreversibel verformbar. Die mechanische Komponente 49a ist in der gezeigten Ausführungsform als eine Membran ausgeführt, wobei als Material ein elektrisch leitfähiges Metall bzw. Metalllegierung, eine Trägermaterial mit einer elektrisch leitfähigen Beschichtung und/oder ein elektrisch leitfähiger Kunststoff verwendet wird. Durch die gewählte Form der mechanischen Komponente 49a wirkt ein Druckanstieg im Inneren des elektrischen Energiespeichers gleichmäßig auf diese. Durch das gewählte Material der mechanischen Komponente 49a wird eine zu überschreitende Kraft vorgegeben, bei der die mechanische Komponente 49a verformt wird.

Figur 4b zeigt eine zweite Ausführungsform einer mechanischen Komponente 49b einer Auslöseeinheit des erfindungsgemäßen Batteriesystems. Die mechanische Komponente 49b ist elektrisch mit dem Gehäuse 41 des elektrischen Energiespeichers verbunden. Durch die gewählte Form der mechanischen Komponente 49b wird bei einer Verformung ein geringerer Widerstand zwischen der mechanischen Komponente 49b und einem Leiter erreicht.

Figur 4c zeigt eine dritte Ausführungsform einer mechanischen Komponente 49c einer Auslöseeinheit des erfindungsgemäßen Batteriesystems. Durch die gewählte Form der mechanischen Komponente 49c wird eine großflächige Verbindung zwischen der mechanischen Komponente 49c und einem Leiter erreicht. Weiter werden Bewegungen des Gehäuses 41 des elektrischen Energiespeichers ausgeglichen, wodurch eine Beschädigung der mechanischen Komponente 49c verhindert wird.

## Patentansprüche

1. Batteriesystem (10, 20, 30) mit einem Überladungs- und/oder Tiefentladungsschutz, umfassend mindestens einen elektrischen Energiespeicher mit einem ersten Pol (12, 22), der mit einer ersten Elektrode des elektrischen Energiespeichers elektrisch verbunden ist, mit einem zweiten Pol (14, 24), der über eine Schnellentladeeinheit (16, 26, 36) mit einer zweiten Elektrode des elektrischen Energiespeichers elektrisch verbunden ist, wobei die Schnellentladeeinheit (16, 26, 36) zum elektrischen Entladen des elektrischen Energiespeichers einen ersten Anschluss (261, 361), der mit dem ersten Pol elektrisch verbunden ist, **dadurch gekennzeichnet, dass** das Batteriesystem (10, 20, 30) eine Auslöseeinheit (17, 27, 37) mit einer elektrisch leitfähigen mechanischen Komponente (29, 39, 49a, 49b, 49c) zum Auslösen der Schnellentladeeinheit (17, 27, 37) umfasst, wobei die mechanische Komponente (29, 39, 49a, 49b, 49c) mittels eines elektrisch leitfähigen Gehäuses (11, 21) des elektrischen Energiespeichers und/oder mittels einer elektrischen Verbindung direkt mit der zweiten Elektrode elektrisch verbunden ist.

2. Batteriesystem (10, 20) nach einem der vorhergehenden Ansprüche, **dadurch gekennzeichnet, dass** die Schnellentladeeinheit (16, 26) eine Schnellentladeschaltung (263) umfasst.

3. Batteriesystem (10, 20) nach Anspruch 2, **dadurch gekennzeichnet, dass** die Schnellentladeschaltung (263) eine Entladeschaltung (300) und eineHalbbrücke (310) umfasst.

4. Batteriesystem (10, 20) nach einem der vorhergehenden Ansprüche, **dadurch gekennzeichnet, dass** die mechanische Komponente (29, 39, 49a, 49b, 49c) der Auslöseeinheit (17, 27, 37) reversibel oder irreversibel durch eine auf die mechanische Komponente (29, 39, 49a, 49b, 49c) wirkende Kraft verformbar ist.

5. Verfahren zur Ansteuerung einer Schnellentladeeinheit (263) des Batteriesystems (10, 20) nach einem der Ansprüche 1 bis 4, **dadurch gekennzeichnet, dass** zum Entladen des elektrischen Energiespeichers in der Halbbrücke (310) ein Leistungshalbleiter (311) eingeschaltet und ein anderer Leistungshalbleiter (320) in einem aktiven Betrieb als steuerbarer Widerstand betrieben wird.

6. Verwendung eines Batteriesystems (10, 20) nach einem der Ansprüche 1 bis 4 in einem Fahrzeug mit mindestens einem elektrischen Energiespeicher.

7. Verwendung des Batteriesystems (10, 20) nach Anspruch 6, wobei der elektrische Energiespeicher eine Lithium-Ionen-, eine Lithium-Schwefel- und/oder eine Lithium-Luft-Batterie ist.
